# EUROPEAN PATENT APPLICATION

(11) **EP 4 523 794 A1**
(43) Date of publication of application: **19.03.2025**
(21) Application number: 23197918.8
(22) Date of filing: 18.09.2023
(51) Int. Cl.: B04B 5/12, B04B 7/04, B04B 5/00

(54) **A CENTRIFUGAL SEPARATOR FOR CLEANING GAS**

(71) Applicant: Alfdex AB, 261 24 Landskrona (SE)
(72) Inventor: NYBERG, Cédric, 147 63 Uttran (SE)
(74) Representative: Alfa Laval Attorneys

(57) **Abstract**

The present invention provides a centrifugal separator (1) for cleaning gas containing contaminants. The centrifugal separator comprises a stationary casing (2), enclosing a separation space (3) through which a gas flow is permitted, a gas inlet (20) extending through the stationary casing (2) and permitting supply of the gas to be cleaned, a rotating member (7) comprising a separation unit (16) arranged in said separation space (3) and being arranged to rotate around an axis (X) of rotation. The separator (1) further comprises a gas outlet (28) arranged through the stationary casing (2) and configured to permit discharge of cleaned gas out from the stationary casing (2), a drainage outlet (29) arranged in the stationary casing (2) and configured to permit discharge of liquid contaminants that have been separated from the gas out from the stationary casing and a drive member (22) for rotating the rotating member (7). The stationary casing (2) comprises a lower end wall (6) axially below the separation unit (16). The drainage outlet (29) is arranged in connection with the lower end wall (6). And at least one guide vane (60) is arranged axially below the separation unit (16) and axially above the lower end wall (6), said at least one guide vane (60) having a shape to guide a rotating gas flow to act on liquid contaminants to enhance their movement towards the drainage outlet (29).

## Description

### Field of the Invention

The present invention relates to the field of centrifugal separators for cleaning a gas containing liquid contaminants. In particular, the present invention relates to a separator for cleaning crankcase gases of a combustion engine from oil particles.

### Background of the Invention

It is well known that a mixture of fluids having different densities may be separated from one another through use of a centrifugal separator. One specific use of such a separator is in the separation of oil from gas vented from a crankcase forming part of an internal combustion engine.

With regard to this specific use of separators, there can be a tendency for the high-pressure gas found in the combustion chambers of an internal combustion engine to leak past the associated piston rings and into the crankcase of the engine. This continuous leaking of gas into the crankcase can lead to an undesirable increase of pressure within the crankcase and, as a consequence, to a need to vent gas from the casing. Such gas vented from the crankcase typically carries a quantity of engine oil (as droplets or a fine mist), which is picked up from the reservoir of oil held in the crankcase.

In order to allow vented gas to be introduced into the inlet system without also introducing unwanted oil (particularly into a turbocharging system wherein the efficiency of the compressor can be adversely affected by the presence of oil), it is necessary to clean the vented gas (i.e., to remove the oil carried by the gas) prior to the gas being introduced into the inlet system. This cleaning process may be undertaken by a centrifugal separator, which is mounted on or adjacent the crankcase and which directs cleaned gas to the inlet system and directs separated oil back to the crankcase. An example of such a separator is disclosed e.g., in US 8,657,908.

Some separators for cleaning crankcase gas have a stationary insert in the housing of the separator (see e.g., US 8,657,908), which aids in keeping the separated contaminants away from the cleaned gas. From the stationary insert the clean gas is supposed to flow via the outlet tube either to the motor's air inlet or to the open air. Contaminants such as oil and oil drops are supposed to be guided radially outside of the stationary insert and be drained out in the lower part of the centrifugal separator.

However, all contaminants such as e.g., oil do not always find its way to be drained out, so contaminants may become trapped within the centrifugal separator, before reaching the outlet.

There is thus a need in the art for an improved drainage of contaminants of a centrifugal separator.

### Summary of the Invention

It is an object of the invention to at least partly overcome one or more limitations of the prior art. In particular, it is an object to provide a centrifugal separator with an enhanced drain function that efficiently removes contaminants such as oil, soot and other particles.

As a first aspect of the invention, there is provided a centrifugal separator for cleaning gas containing contaminants, said centrifugal separator comprising a stationary casing, enclosing a separation space through which a gas flow is permitted, a gas inlet extending through the stationary casing and permitting supply of the gas to be cleaned, a rotating member comprising a separation unit arranged in said separation space and being arranged to rotate around an axis (X) of rotation, a gas outlet arranged through the stationary casing and configured to permit discharge of cleaned gas out from the stationary casing, a drainage outlet arranged in the stationary casing and configured to permit discharge of liquid contaminants that have been separated from the gas out from the stationary casing; a drive member for rotating the rotating member; wherein the stationary casing comprises a lower end wall axially below the separation unit, wherein the drainage outlet is arranged in connection with the lower end wall, and wherein at least one guide vane is arranged axially below the separation unit and axially above the lower end wall, said at least one guide vane having a shape to guide a rotating gas flow to act on liquid contaminants to enhance their movement towards the drainage outlet.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position". A radial plane is a plane having its normal parallel to the axis of rotation (X). An axial plane is a plane having its normal perpendicular to the axis of rotation (X).

The contaminants in the gas may comprise liquid contaminants, such as oil, and soot.

Consequently, the centrifugal separator may be for separating liquid contaminants, such as oil, from gas. The gas may be crankcase gas of a combustion engine. However, the centrifugal separator may also be suitable for cleaning gases from other sources, for instance the environment of machine tools which frequently contains large amounts of liquid contaminants in the form of oil droplets or oil mist.

The stationary casing of the centrifugal separator may comprise a surrounding side wall, and an upper end wall and a lower end wall, which enclose the separation space. The stationary casing may have a cylindrical shape with circular cross-section having a radius R from the axis (X) of rotation to the surrounding side wall. This radius R may be constant at least with respect to a major part of the circumference of the surrounding side wall. The stationary casing may also be slightly conical.

The gas inlet of the centrifugal separator may be arranged through the upper end wall or through the surrounding side wall close to the upper end wall, thus at the top of the separator, such that gas entering through the gas inlet is directed to the separation space. The downstream portion of the gas inlet may be centred around the axis of rotation (X). The gas inlet may further comprise an upstream portion in the form of an inlet conduit. This conduit may extend radially or axially from the centrifugal separator, or in any other direction therebetween.

The rotating member is arranged for rotation during operation by means of the drive member. The rotating member comprises a separation unit arranged in the separation space. The separation unit of the rotating member may be a surface-enlarging insert, such as a disc stack or filter, that promotes separation of contaminants from the gas.

The rotating member may be journaled within the stationary casing via at least one bearing, such as via an upper and lower bearing arranged axially above and below the separation unit, respectively.

The surrounding side wall may be divided into a lower surrounding sidewall that may be cylindrical in shape and may be joined to an upper surrounding sidewall e.g., by welding or by fastening members such as screws. This facilitates mounting of the rotating member inside the stationary casing. The lower surrounding annular sidewall may extend down to the lower end wall of the stationary casing. The lower end wall may thus be the lower wall extending in the radial direction, such as in the radial plane or with a small angle relative the radial plane. In some embodiments, also the lower end wall is part of the lower surrounding annular sidewall.

Further, the upper end wall of the stationary casing may be formed as one unit together with the upper surrounding annular sidewall.

In embodiments, the centrifugal separator comprises a single surrounding annular sidewall and a lid portion that forms the upper end wall of the stationary casing.

The outlet for cleaned gas may be in the form of an opening or a gas outlet tube extending through a wall of the stationary casing, such as through a lower portion of the surrounding side wall of the stationary casing.

The gas outlet tube may be a generally cylindrical tube or have another cross-section, such as an oval cross-section. During operation, gas to be cleaned may be directed centrally through the separation unit from the gas inlet and through the separation unit radially outwards.

The drive member may for example comprise a turbine wheel, rotated by means of an oil jet from the lubrication oil system of the combustion engine or a free jet wheel comprising a blow-back disk. However, the drive member may also be independent of the combustion engine and comprise an electrical motor, a hydraulic motor or a pneumatic motor.

The drainage outlet may be arranged in the lower portion of the stationary casing, such as arranged in the lower end wall, e.g. at the bottom of the separator. The drainage outlet of the centrifugal separator may be formed by several spot shaped through holes of the stationary casing or by a single drainage passage.

The centrifugal separator further comprises at least one guide vane. Such a guide vane is arranged in the lower part of the stationary casing in order to guide the rotating gas flow. It is desirable to guide and control the gas flow since a noncontrolled flow may create an asymmetrical flow pattern so that the force acting on liquid contaminants is not in the desired direction, towards the drainage outlet. In such situation drainage of contaminants may be slow or even not work at all, especially if the separator is subject to certain conditions such as being in a tilted position or when separating contaminants having a high viscosity.

The first aspect of the invention is based on the insight that by implementing and designing the guide vanes to guide the gas flow to act on the contaminants, the movement of contaminants towards the drainage outlet is increased.

Consequently, the centrifugal separator for cleaning gas containing contaminants achieves an efficient drainage that removes contaminants to a large extent and with high speed.

According to the first aspect, at least one guide vane is arranged axially below the separation unit and axially above the lower end wall. The purpose is to guide the rotating gas flow. Without any guidance the gas flow tends to rotate following the inside of the outer side wall of the stationary casing. The guide vane may be arranged somewhere on the radial distance from the axis (X) of rotation to the surrounding side wall. The location is dependent on how the gas flow should be directed, however a certain distance from the side wall is required in order to lead the gas flow away from the side wall. This design achieves a symmetrical gas flow that creates a force on the contaminants in the desired direction. The guide vane then guides the gas flow to be directed in the desired direction away from the side wall.

As an example, the at least one guide vane may be arranged to guide the gas flow so that a circular gas flow is formed over the lower end wall.

In embodiments of the first aspect, the at least one guide vane is connected to the lower end wall. Thereby the rotating gas flow is guided in the lowermost part of the separator by the at least one guide vane. The guide vane may be fixed to the lower end wall. The guide vane may be arranged somewhere on the radial distance from the axis (X) of rotation to the surrounding side wall with the purpose to guide the rotating gas flow.

Further, the at least one guide vane may be a curved blade seen in a radial plane. The guide vane may have any shape around which air can flow smoothly. In a cross-sectional view (in the radial plane) this could be a shape that is oblong with no sharp edges such as rectangular with rounded corners or oval. The guide vane may also be a wing shaped blade seen in a radial plane, i.e., an aerofoil shape, so the guide vane is a streamlined body. A wing shaped blade may have a rounded end and oppositely a pointed end as seen in the radial plane. Further, one of the two lines connecting the ends may be convex and the other may be concave, preferably the radially outer side may be convex, and the radially inner side may be concave. Moreover, the pointed end may be slightly tilted inwardly in a radially direction. This gives an enhanced guidance of the rotating gas flow that assists in draining oil by influencing the oil to be drawn in the same direction as the gas flows. The guide vane may be orientated such that the overall shape mainly follows the direction of the rotating gas flow. Thereby, the gas flow can rotate smoothly, with less possible turbulence. Preferably, the gas flow may rotate in a counterclockwise direction and the guide vane's rounded end may be faced to meet the gas flow, and the opposite end of the guide vane, having a pointed end, may be orientated in a counterclockwise direction from the rounded end.

In embodiments, the at least one guide vane is a stand-alone socket arranged on the lower end wall. Thereby the at least one guide vane is a separate item, i.e., a single unit, only connected to the lower end wall. Such a stand-alone socket is efficient for guiding the gas flow since it's a sole point that does not hinder or cause disturbance in the gas flow.

In embodiments of the first aspect, the centrifugal separator comprises a stationary insert arranged in the stationary casing and configured for segregating cleaned gas and separated contaminants prior to the cleaned gas and separated contaminants exiting said stationary casing, wherein said stationary insert is arranged axially below the separation unit and axially above the lower end wall, wherein said stationary insert is arranged such that a cavity is defined between the stationary insert and the lower end wall and throughout the radial extension of the lower end wall, and wherein said at least one guide vane is arranged within said cavity.

So, during operation, gas to be cleaned may be directed centrally through the separation unit from the gas inlet through the separation unit radially outward. The gas flow may continue travelling downward in the stationary casing. The gas flow may travel in a rotating motion within the stationary casing, close to the surrounding side wall. Part of the gas flow may leave the separator through the gas outlet tube, and part of the gas flow may continue all the way down to the lower end wall of the stationary casing, where the gas flow continues circulating at the outer periphery.

The surrounding annular sidewall could thus be the wall through which the gas outlet tube may be arranged.

An open design on the lower side of the insert (axially below the insert) is advantageous in order for the gas flow to have ample space to circulate. The stationary insert may comprise an annular wall member. The stationary insert may be arranged in the stationary housing so as to form an annular vertical channel for the separated contaminants between the inner wall of the stationary casing and the annular wall member. Part of the gas flow may also pass through this annular vertical channel.

The annular wall member may thus extend in the axial direction, such as parallel to the axis of rotation (X) or with a slight angle with the axis of rotation (X).

Moreover, the stationary insert may further comprise a central cup member with conically extending sidewalls. At least a portion of the rotating member may be arranged within such central cup member. So that the central cup member may be arranged around the axis of rotation.

As an example, the annular wall member of the stationary insert discussed above may extend downwards from the outer edge of the cup member.

In embodiments of the first aspect, the stationary insert is arranged in a lower portion of the stationary casing.

The lower portion may thus be the lower half of the stationary casing. As discussed above, the stationary casing may comprise an upper and lower surrounding annular sidewall. The stationary insert may then be arranged axially within the lower surrounding side wall such that the lower surrounding sidewall encloses the insert.

In embodiments of the first aspect, the cavity between the stationary insert and the lower end wall has an axial height being at least 50% of the height of the stationary insert. The cavity may also be greater, such as 60-70% of the height of the stationary insert, or smaller, such as 30-40% of the height of the stationary insert. The cavity should allow the gas flow to circulate without hindrance and give sufficient space to effectively move contaminants towards the drainage outlet. So, the size of the cavity should be large enough for the gas flow to freely circulate, while at the same time does not build a too large/high separator.

Further, the at least one guide vane may support the stationary insert on the lower end wall. Thereby, the guide vane is connected to both the stationary insert and the lower end wall. Preferably the at least one guide vane is manufactured together with the stationary insert as one piece, which is convenient from manufacturing perspective.

In embodiments of the first aspect, the number of guide vanes is at least two. This is a more efficient way to guide the gas flow. The amount of guide vanes could also be higher, such as at least three, at least four or at least five. The guide vanes should guide the gas flow, and a higher number might be more efficient, but it should preferably not take up too much of the area of the lower end wall. The guide vanes can be located on the same radial distance, or they can be located at different radial distances from the centre, i.e., the axis of rotation (X).

In embodiments of the first aspect, the height of the guide vane is at least 30% of the cavity height. A certain height of the guide vane is required in order to influence the gas flow to a large extent. The height of the guide vane in relation to the cavity height may also be at least 40 %, 50 %, 60 %, 70 %, 80 % or 90 %. The height could also be nearly the full height of the cavity, such as 95 - 99 % of the height of the cavity. The guide vane can be arranged in connection to the stationary insert or arranged in connection to the lower end wall. If the number of guide vanes is larger than one, all guide vanes do not need to have the same height.

In embodiments, the drainage outlet is arranged centrally in the lower end wall and configured to discharge liquid contaminants. The guide vane would then direct the gas flow to rotate away from the side wall towards the centre, close to the axis of rotation. This location of the drainage outlet will efficiently drain away liquid contaminants since this is the location to which the gas flows and thus the liquid contaminants will be guided. The drainage outlet could also be arranged at some distance from the centre of the lower end wall. So, the drainage outlet may be arranged in an end wall opposite the end wall through which, or at which, the inlet is arranged.

Thus, the drainage outlet may be arranged at the axis of rotation or centred around the axis of rotation. The drainage outlet may be in an annular collection groove or may be formed as several through holes at the inner end wall of the stationary casing. The drainage outlet may be arranged such that contaminants, such as oil, are drained through a bearing arranged for journaling the rotating member. The drainage outlet may be formed so that oil can flow through the lower bearing, or radially outside the lower bearing, down into the turbine housing.

In embodiments of the first aspect, the lower end wall comprises elongated recesses guiding liquid contaminants to the drainage outlet. The recesses are preferably spread out on the lower end wall. The gas flow guides the liquid contaminants, and when reaching a recess, a large amount of the contaminants will be collected there.

In embodiments of the first aspect, the recesses of the lower end wall are arranged radially. The recesses may be arranged from the outer periphery to the centre of the lower end wall, where the drainage outlet is located. The recesses are arranged to cover most of the radial distance of the lower end wall, so liquid contaminants following with the circulating gas flow reach the recesses and are then being led directly to the drainage outlet. The contaminants are influenced by the pressure difference of the gas flow inwards towards the centre of the lower end wall.

As an example, the recesses of the lower end wall may be straight or curved, as seen in the radial plane.

In embodiments of the first aspect, the number of recesses is at least four. The number could also be larger, such as at least five, six, seven, eight or ten. The area of the lower end wall would advantageously have a certain percent covered by recesses. At least four recesses would give sufficient coverage that ensures a high degree of drainage at the lower end wall.

In embodiments of the first aspect, said separation unit comprises a plurality of separation members. The separation members of the rotating member are examples of surface-enlarging inserts that promote separation of contaminants from the gas.

In embodiments of the first aspect, said plurality of separation members is arranged as a stack of frustoconical separation discs. A frustoconical disc may have a planar portion extending in a plane that is perpendicular to the axis of rotation, and a frustoconical portion that may extend upwards or downwards. The planar portion may be closer to the rotational axis than the frustoconical portion. Further, the discs of the stack may be radial discs, in which substantially the whole disc extends in a plane that is perpendicular to the axis of rotation. Such discs may have an outer radius and an inner radius, thus forming a central opening in the disc.

In embodiments of the first aspect, the rotating member comprises an axial shaft that is supported by the at least one bearing. The axial shaft may thus be centred at the axis of rotation (X). The separation members may be arranged around such axial shaft.

It is also to be understood that the separation members, such as separation discs, not necessarily have to be arranged in a stack. The separation space may for example comprise axial discs, or plates that extend around the axis of rotation. The axial discs or plates may be planar, i.e., extending in planes that are parallel to the axis of rotation. The axial discs or plates may also have a slightly or significantly curved shape, such as an arcuate or spiral shape, as seen in a radial plane.

During operation, gas to be cleaned may be directed centrally through the plurality of separation members, such as centrally through the stack of separation discs. In such a set-up, the rotating member may further define a central space formed by at least one through hole in the separation members. This central space is connected to the gas inlet and configured to convey the gas to be cleaned from the gas inlet to the interspaces between the separation members, such as between the interspaces between the discs of a stack of separation discs. A separation disc that may be used as separation member may comprise a central, essentially flat portion perpendicular to the axis of rotation. This portion may comprise the through holes that form part of the central space.

Thus, the centrifugal separator may be configured to convey gas to be cleaned, such as crankcase gases, from the gas inlet into a central portion of the rotating member. In this manner the crankcase gases may be "pumped" from the central portion of the rotating member into the interspaces between the separation discs in the stack of separation discs by the rotation of the rotating member. Thus, the centrifugal separator may work according to the concurrent flow principle, in which the gas flows in the disc stack from a radial inner part to a radial outer part, which is opposite to a separator operating according to the counter-current flow principle, in which the gas is conducted into the separation space at the periphery and conveyed towards a central part of the separation space.

As an alternative, the separation unit may comprise filter elements through which the gas is lead.

As a second aspect of the invention, there is provided a method for cleaning gas containing contaminants, the method comprising
guiding gas containing contaminants to a centrifugal separator according to the first aspect above during rotation of the rotating member,
discharging cleaned gas from the gas outlet, and
discharging contaminants via the drainage outlet.

The contaminants in the gas may comprise liquid contaminants, such as oil, and soot.

This aspect may generally present the same or corresponding advantages as the former aspects. Effects and features of the second aspect are largely analogous to those described above in connection with the first and second aspects. Embodiments mentioned in relation to the first aspect are largely compatible with the second aspect.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of the cross-section of an embodiment of a centrifugal separator for cleaning gas.
Figure 2 shows an embodiment of a lower end wall of a centrifugal separator.
Figure 3 shows an embodiment of a lower end wall and a stationary insert of a centrifugal separator.

### Detailed Description

The centrifugal separator according to the present disclosure will be further illustrated by the following description with reference to the accompanying drawings.

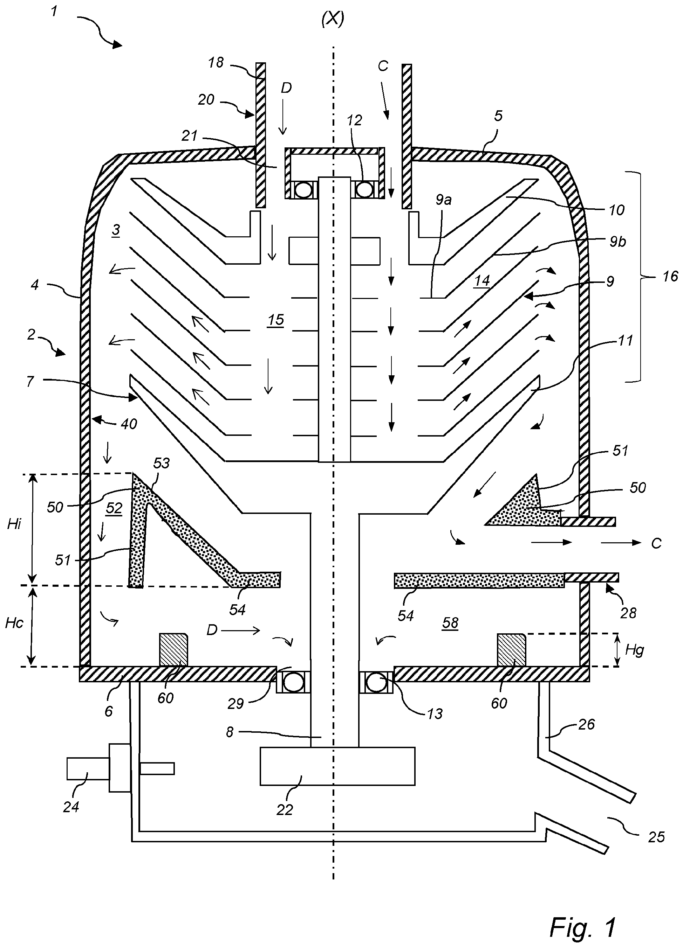

Fig. 1 shows a cross-section of a centrifugal separator 1 according to the present disclosure. The centrifugal separator 1 comprises a stationary casing 2, which is configured to be mounted to a combustion engine (not disclosed), especially a diesel engine, at a suitable position, such as on top of the combustion engine or at the side of the combustion engine.

It is to be noted that the centrifugal separator 1 is also suitable for cleaning gases from other sources than combustion engines, for instance the environment of machine tools which frequently contains large amounts of liquid contaminants in the form of oil droplets or oil mist.

The stationary casing 2 encloses a separation space 3 through which a gas flow is permitted. The stationary casing 2 comprises, or is formed by, a surrounding side wall 4, an upper end wall 5 and a lower end wall 6.

The centrifugal separator 1 comprises a rotating member 7, which is arranged to rotate around an axis (X) of rotation. It should be noted that the stationary casing 2 is stationary in relation to the rotating member 7, and preferably in relation to the combustion engine to which it may be mounted.

The stationary casing 2 has a radius from the axis (X) of rotation to the surrounding side wall 4 that is constant at least with respect to a major part of the circumference of the surrounding side wall 4. The surrounding side wall 4 thus has a circular, or substantially, circular cross-section in a radial plane.

The rotating member 7 comprises a rotatable shaft, i.e., spindle 8 and a separation unit 16 attached to the spindle 8. The separation unit 16 comprises a plurality of separation members, which may be a stack of separation discs 9. All the separation discs of the stack 9 are provided between a top disc 10 and a lower end plate 11.

The spindle 8, and thus the rotating member 7, is rotatably supported in the stationary casing 2 by means of an upper bearing 12 and a lower bearing 13, the bearings being arranged one on each axial side of the stack of separation discs 9. However, the bearings could for example both be arranged axially below or above the stack 9 of separation discs.

The separation discs of the disc stack 9 are frusto-conical and extend outwardly and upwardly from the spindle 8. The separation discs thus comprise a flat portion 9a, which extend perpendicularly to the axis of rotation (X), and a conical portion 9b, that extend outwardly and upwardly from the flat portion 9a. It should be noted that the separation discs also could extend outwardly and downwardly, or even radially.

The separation discs of the stack 9 are provided at a distance from each other by means of distance members (not disclosed) in order to form interspaces 14 between adjacent separation discs 9, i.e., an interspace 14 between each pair of adjacent separation discs 9. The axial thickness of each interspace 14 may e.g., be in the order of 0.5-2 mm, such as 1-2 mm.

The separation discs of the stack 9 may be made of plastic or metal. The number of separation discs in the stack 9 is normally higher than indicated in Fig. 1 and may be for instance 50 to 100 separation discs 9 depending on the size of the centrifugal separator.

The centrifugal separator 1 comprises an oil nozzle 24 arranged for being connected to an engine oil circuit of an internal combustion engine. During running of the internal combustion engine, oil is pumped through the oil nozzle 24 onto a turbine wheel 22, which is arranged in turbine housing 26. Since turbine wheel 22 is connected to the spindle 8, the rotating member 7, and thus the stack of separation discs 9, also rotate upon rotation of wheel 22. As an alternative, the centrifugal separator 1 may comprise an electric motor arranged to rotate the spindle 8 and rotating member 7. As a further alternative, the centrifugal separator 3 may comprise a turbine wheel connected to the spindle 8, where the turbine wheel is arranged to be driven by exhaust gases from the internal combustion engine to rotate the spindle 8 and the rotating member 7. The rotating member 7 may also be arranged for being rotated by a mechanical drive unit. Thus, the centrifugal separator may comprise a mechanical drive unit for rotating the rotating member.

The rotating member 7 defines a central space 15. The central space 15 is formed by a through hole in each of the separation discs 9. In the embodiments of Fig. 1, the central space 15 is formed by a plurality of through holes, each extending through the top disc 10 and through each of the separation discs 9, but not through the lower end plate 11. The through holes are arranged in the flat portions 9a of the separation discs.

A gas inlet 20 is for the supply of the gas to be cleaned. The gas inlet 20 extends through the stationary casing 2, and more precisely through upper end wall 5. The gas inlet 20 is formed by the axially extending inlet conduit 18, which forms an upstream portion, and by through channels 21 that form a downstream portion of the inlet 20.

The through channels 21 are in fluid connection with central space 15 and are arranged radially outside the upper bearing 12. Thus, the gas inlet 20 communicates with the central space 15 so that the gas to be cleaned is conveyed from the inlet 20 via the central space 15 to the interspaces 14 of the stack of separation discs 9. The gas inlet 20 is configured to communicate with the crankcase of the combustion engine, or any other source, via the inlet conduit 18 permitting the supply of crankcase gas from the crankcase to the gas inlet 20 and further to the central space 15 and the interspaces 14 as explained above.

The centrifugal separator 1 comprises a drainage outlet 29 arranged in the lower portion of the stationary casing 2 and configured to permit discharge of liquid contaminants separated from the gas. The drainage outlet 29 is in this embodiment in the form of through holes arranged in the lower end wall 6 so that separated liquid contaminants flow through the lower bearing 13 as they are drained from the separation space 3 to the turbine housing 26. The separated oil, and other particles and/or substances, is led to an oil outlet 25 of the centrifugal separator 1, which together with oil from the oil nozzle 24 used to drive the wheel 22, may be led back to the engine oil circuit of an internal combustion engine. The drainage outlet 29 in this embodiment is placed centrally on the lower end wall 6. In further embodiments the drainage outlet 29 may be placed elsewhere on the lower end wall 6.

A gas outlet tube 28 of the centrifugal separator 1 is arranged through the stationary casing 2 and is configured to permit discharge of cleaned gas.

During operation of the centrifugal separator as shown in Fig. 1, the rotating member 7 is kept in rotation by the oil nozzle 24 supplying oil against the wheel 22. As an example, the rotational speed may be in the range of 7.500-12.000 rpm.

Contaminated gas, e.g., crankcase gas from the crankcase of an internal combustion engine, is supplied to the gas inlet 20 via conduit 18. This gas is conducted further into the central space 15 and from there into and through the interspaces 14 between the separation discs of the stack 9. As a consequence of the rotation of the rotating member 7 the gas is brought to rotate, whereby it is pumped further on radially outwardly through gaps or interspaces 14.

During the rotation of the gas in the interspaces 14, solid or liquid particles such as oil suspended in the gas are separated therefrom. The particles settle on the insides of the conical portions 9b of the separation discs and slide or run after that radially outwardly thereon. When the particles and/or liquid drops have reached out to the radial outer edges of the separation discs 9, they are thrown away from the rotating member 7 and hit the inner surface 40 of the surrounding side wall 4. Separated oil particles may form a film on the inner surface of the stationary casing 2. From there, oil may be pulled by gravity downwardly to bottom end wall 6 and then leave the separation space 3 through the drainage outlet 29. For this purpose, the inner wall of the bottom end wall 6 may be tilted radially inwards, so that oil leaving the surrounding inner wall of the stationary casing 2 may be pulled by gravity towards drainage outlet 29. The path of the contaminants in the gas is schematically illustrated by arrows "D" in Fig. 1.

Cleaned gas freed from particles and exiting from the stack of separation discs 9 leaves the stationary casing 2 through the gas outlet tube 28. The path of the gas through the centrifugal separator 1 is schematically shown by arrows "C" in Fig. 1.

The centrifugal separator of Fig. 1 also comprises a stationary insert 50, which is arranged in a lower portion of the stationary casing 2. This stationary insert 50 could comprise an annular wall member 51 and a central frustoconical cup member 53 with conically extending sidewalls. The lower part of the end plate 11 could be arranged within the central cup member 53. The stationary insert could also be fastened to the lower end wall 6, such as to a bearing plate for the lowermost bearing 13, or, as in this example, via guide vanes 60 that are arranged as supporting legs.

The annular wall member 51 extends axially downwards from the outer edge of the cup member 53. The stationary insert 50 is configured for segregating cleaned gas and separated contaminants prior to the cleaned gas and separated contaminants exit the stationary casing 2. For this purpose, the stationary insert 50 is arranged in the stationary housing 2 so as to form an annular vertical channel 52 for the separated contaminants between the inner surface 40 of the stationary casing 2 and the annular wall member 51.

The stationary insert 50 has a height Hi seen in an axial direction (parallel to the axis of rotation (X)) that is defined by the conical cup member 53 from its upper outer edge to its lower edge connecting to a flat portion 54 of the stationary insert 50, which extends perpendicularly to the axis of rotation (X). Under the stationary insert 50 is a cavity 58. The cavity 58 has a height Hc seen in an axial direction (parallel to the axis of rotation (X)) that is defined from the flat portion 54 of the stationary insert 50 to the lower end wall 6.

The annular vertical channel 52 may form an annular slit and, during use of the separator 1, may collect separated oil droplets which are thrown from the separation discs 9 and run downwards on the inner surface 40 of the surrounding side wall 4 under the action of gravity. Also, the action of a downwards spiralling gas flow may force the oil on the inner surface 40 downwards. Oil in the vertical channel 52 may flow so as to pass into the region formed below an underside of the housing insert 52 and be drained via drainage outlet 29. The annular wall member 51 could also be left out, so that the stationary insert 50 is mainly defined by the conical cup member 53 and the flat portion 54, which could be sufficient to direct the gas flow in connection to the gas outlet.

The drainage outlet 29 may be formed so that liquid contaminants flow through the lower bearing 13, or radially outside the lower bearing 13. The liquid contaminants, such as oil, flow down into the turbine housing 26.

The annular vertical channel 52 thus shields the separated liquid particles flowing down on inner wall 40 from the rotating gas, so as to decrease the risk of separated oil being pulled from the inner wall 40 on its way down to drainage outlet 29.

Cleaned gas flows in this example into the gas outlet tube 28 via the inner volume formed by the cup member 53, since the gas outlet tube has its gas inlet at an inner surface of the cup member 53.

Apart from the path of the cleaned gas being directed and lead out through the gas outlet tube, the gas flow is also flowing down in a spiralling movement. When reaching the lower part of the separator the gas flow circulates in the cavity 58, close to the inner surface 40 of the surrounding side wall 4.

Guide vane 60 is arranged in the lower part of the separator in order to guide the gas flow circulating in the cavity 58. As illustrated there may be two guide vanes 60 or more. The guide vanes are placed at a certain distance from the surrounding side wall 4 to guide the gas flow towards the drainage outlet 29. The guide vanes are arranged on the lower end wall 6 and have a height Hg seen in the axial direction.

The stationary insert 50 is a moulded unit, preferably of a polymer or a plastic material.

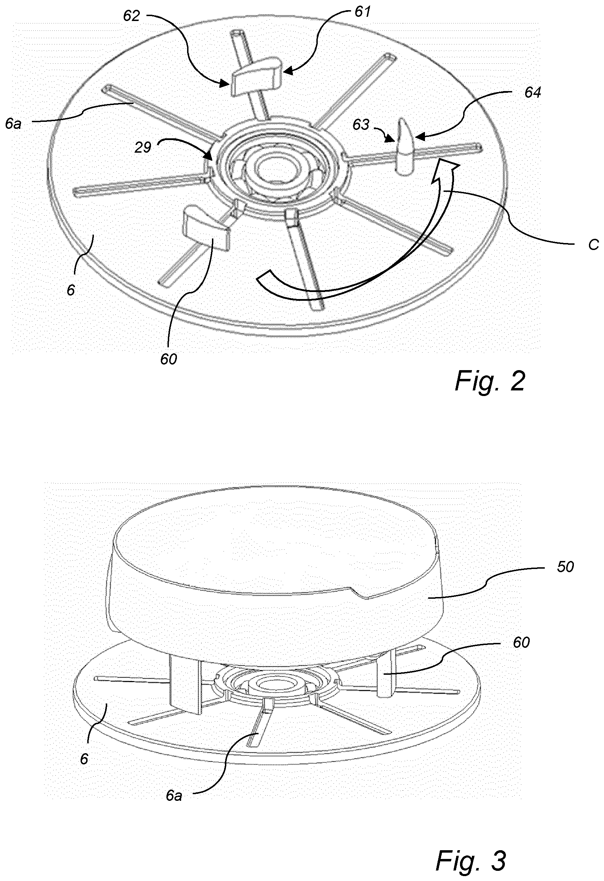

Fig 2 shows a perspective view of the lower end wall of the centrifugal separator. The circulating gas is illustrated with arrow "C". In this embodiment three guide vanes 60 are illustrated, being arranged on the lower end wall 6. The guide vanes 60 can be fixed to the lower end wall 6. The guide vanes 60 are relatively evenly distributed around the rotational axis (X), i.e., approximately 120 degrees apart. The distribution around the rotational axis (X) could also vary, so that the circumferential distance between two adjacent guide vanes would not be the same as between two consecutive guide vanes. In the illustrated embodiment the guide vanes 60 are arranged on the same radial distance from the centre. However, the radial distance of the guide vanes 60 could vary so they are arranged on different radial distances.

Guide vanes 60 have a rounded, preferably curved shape. Optimal the guide vanes 60 would have a wing shape, i.e., an aerofoil shape, so each guide vane is a streamlined body seen in the cross-section in the radial plane. Such shape guides the cleaned gas around the guide vanes so that oil is directed towards the drainage outlet 29. The shape is also advantageous in order to avoid oil getting trapped at the guide vanes 60 on the lower end wall 6. As seen in the radial plane, the guide vanes 60 could also have a cross-section that is round, oval, or any other shape that directs the gas flow and minimizes the amount of liquid contaminants gathering at the guide vanes.

In this example, the cross-section of a guide vane 60 in the radial plane has a rounded end 61 and oppositely a pointed end 62 with two lines 63, 64 connecting the rounded end 61 with the pointed end 62. The two lines 63, 64 are not straight lines; one 63 is concave, and one 64 is convex. Thus, as seen in the embodiment of Fig. 2, the radially inner side of the guide vane 60 is concave 63 and the radially outer side of the guide vane 60 is convex 64. Further, the pointed end 62 may be slightly tilted radially inward.

The guide vane 60 may have an overall oval shape and be orientated such that the oval shape mainly follows the direction of the rotating gas flow, in order to have as little turbulence as possible. Preferably, the rotational direction of the centrifugal separator 1 may be such that the gas flow "C" may rotate in a counterclockwise direction. The guide vane 60 may preferably be arranged such that the pointed end 62 points in a counterclockwise direction from the rounded end 61 and the rounded end 61 faces the rotating gas flow.

The shape of the guide vanes 60 creates a smooth gas flow and also limits the number of contaminants being trapped in connection to a guide vane. The disclosed guide vanes 60 are stand-alone sockets, i.e., singular blocks or single units. These stand-alone sockets are being arranged at different locations on the lower end wall 6. In the example in Fig. 1 the guide vane 60 has an axial height, Hg being less than the axial height of the cavity, Hc, so the guide vane does not connect to the stationary insert 50.

Fig. 3 shows a perspective view of a further embodiment of the lower end wall 6 and the stationary insert 50 of the centrifugal separator 1.

In this example, the stationary insert 50 is supported or fastened to the lower end wall 6 via guide vanes 60, which thus function as supporting legs. These guide vanes 60 could have the same shape in cross sectional view and the same functionality as the guide vanes 60 discussed in relation to Fig. 1 and 2 above. However, the guide vane height, Hg is the same as the cavity height, Hc, or even larger, depending on to which point of the lower side of the stationary insert 50 the guide vane is connected.

As further illustrated in Figs. 2 and 3, the lower end wall 6 comprises elongated recesses 6a on the axially upper side to capture liquid contaminants intended to be drained via the drainage outlet 29. The recesses 6a are preferably radially arranged covering most of the radial distance of the lower end wall 6. Each recess 6a is arranged in the lower end wall 6 from a radially inner position at the drainage outlet 29 to a radially outer position that is a short distance away from the perimeter of the lower end wall 6, which in this example would correspond to the inner surface 40 of the surrounding side wall 4. However, the recesses 6a could as an alternative be arranged to reach from the drainage outlet 29 all the way to the perimeter of the lower end wall 6.

As seen in Figs. 2 and 3, the number of recesses 6a could be eight, and be evenly distributed on the lower end wall 6, with 45 degrees apart. The distribution could also be un-even with varying number of degrees between two consecutive recesses 6a and the number of recesses 6a could also be higher or lower than eight.

The contaminants may be influenced by the pressure difference of the gas flow and thereby be guided inwards towards the centre of the lower end wall 6.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A centrifugal separator (1) for cleaning gas containing contaminants, said centrifugal separator comprising
a stationary casing (2), enclosing a separation space (3) through which a gas flow is permitted,
a gas inlet (20) extending through the stationary casing (2) and permitting supply of the gas to be cleaned,
a rotating member (7) comprising a separation unit (16) arranged in said separation space (3) and being arranged to rotate around an axis (X) of rotation,
a gas outlet (28) arranged through the stationary casing (2) and configured to permit discharge of cleaned gas out from the stationary casing (2),
a drainage outlet (29) arranged in the stationary casing (2) and configured to permit discharge of liquid contaminants that have been separated from the gas out from the stationary casing;
a drive member (22) for rotating the rotating member (7);
wherein the stationary casing (2) comprises a lower end wall (6) axially below the separation unit (16),
wherein the drainage outlet (29) is arranged in connection with the lower end wall (6), and
wherein at least one guide vane (60) is arranged axially below the separation unit (16) and axially above the lower end wall (6), said at least one guide vane (60) having a shape to guide a rotating gas flow to act on liquid contaminants to enhance their movement towards the drainage outlet (29).

2. A centrifugal separator (1) according to claim 1, wherein the at least one guide vane (60) is connected to the lower end wall (6).

3. A centrifugal separator (1) according to claim 1 or 2, wherein the at least one guide vane (60) is a curved blade seen in a radial direction.

4. A centrifugal separator (1) according to any previous claim, wherein the at least one guide vane (60) is a stand-alone socket arranged on the lower end wall (6).

5. A centrifugal separator (1) according to any previous claim, wherein the centrifugal separator comprises
a stationary insert (50) arranged in the stationary casing (2) and configured for segregating cleaned gas and separated contaminants prior to the cleaned gas and separated contaminants exiting said stationary casing (2),
wherein said stationary insert (50) is arranged axially below the separation unit (16) and axially above the lower end wall (6),
wherein said stationary insert (50) is arranged such that a cavity (58) is defined between the stationary insert (50) and the lower end wall (6) and throughout the radial extension of the lower end wall (6), and
wherein said at least one guide vane (60) is arranged within said cavity (58).

6. A centrifugal separator (1) according to claim 5, wherein the cavity (58) between the stationary insert (50) and the lower end wall (6) has an axial height (Hc) being at least 50% of the height (Hi) of the stationary insert (50).

7. A centrifugal separator (1) according to claim 5 or 6, wherein the at least one guide vane (60) is supporting the stationary insert (50) on the lower end wall (6).

8. A centrifugal separator (1) according to any previous claim, wherein the number of guide vanes (60) is at least two.

9. A centrifugal separator (1) according to any of claim 6 to 8, wherein the height (Hg) of the guide vane (60) is at least 30% of the cavity height (Hc).

10. A centrifugal separator (1) according to any previous claim, wherein the drainage outlet (29) is arranged centrally in the lower end wall (6) and configured to discharge liquid contaminants.

11. A centrifugal separator (1) according to any previous claim, wherein the lower end wall (6) comprises elongated recesses (6a) guiding liquid contaminants to the drainage outlet (29).

12. A centrifugal separator (1) according to claim 11, wherein the recesses (6a) of the lower end wall (6) are arranged radially.

13. A centrifugal separator (1) according to claim 11 or 12, wherein the number of recesses (6a) is at least four.

14. A centrifugal separator (1) according to any previous claim, wherein said separation unit (16) comprises a plurality of separation members.

15. A centrifugal separator (1) according to claim 14, wherein said plurality of separation members is arranged as a stack of frustoconical separation discs (9).
